# EUROPÄISCHE PATENTSCHRIFT

(11) **EP 0 502 930 B1**
(45) Veröffentlichungstag und Bekanntmachung des Hinweises auf die Patenterteilung: **03.08.1994**
(21) Anmeldenummer: 91900122.2
(22) Anmeldetag: 05.12.1990
(51) Int. Cl.: G01B 11/24

(54) **VERFAHREN UND ANORDNUNG ZUR OPTOELEKTRONISCHEN VERMESSUNG VON GEGENSTÄNDEN**
PROCESS AND ARRANGEMENT FOR OPTOELECTRONIC MEASUREMENT OF OBJECTS
PROCEDE ET DISPOSITIF DE MESURE OPTOELECTRONIQUE D'OBJETS

(30) Priorität: 05.12.1989 AT 2764/89
(43) Veröffentlichungstag der Anmeldung: 16.09.1992
(73) Patentinhaber: THE BROKEN HILL PROPRIETARY COMPANY LIMITED, Melbourne, VIC 3000 (AU)
(72) Erfinder: BARG, Herbert, A-8605 Kapfenberg (AT); NIEL, Albert, A-8605 Kapfenberg (AT); SCHWENZFEIER, Werner, A-8700 Leoben (AT)
(74) Vertreter: Wildhack, Helmut, Dipl.-Ing. Dr.
(86) Internationale Anmeldenummer: AT9000117
(87) Internationale Veröffentlichungsnummer: WO9108439

(56) Entgegenhaltungen:
- EP-A- 0 002 428
- EP-A- 0 007 079
- EP-A- 0 196 049
- EP-A- 0 214 120
- EP-A- 0 286 994
- EP-A- 0 305 107
- US-A- 4 279 513
- 8th International Conference on Pattern Recognition, Paris, France, 27.-31. Oktober 1986, IEEE, Plc., Yuichi Ohta et al.: "Improving depth map by right-angled trinocular stereo", Seiten 519-521

## Beschreibung

Die Erfindung betrifft ein Verfahren gemäß dem Oberbegriff des Patentanspruches 1. Ferner betrifft die Erfindung eine Anordnung gemäß dem Oberbegriff des Patentanspruches 8.

Derartige Verfahren gewinnen in der Praxis immer mehr Bedeutung, um rasch und genau Gegenstände vermessen zu können. Ein derartiges berührungsloses optisches Meßverfahren zum Vermessen von Querschnittsformen ist in der Montanrundschau BHM, 134.Jg.(1989),Heft 3, S.64-67, diskutiert. In vielen Anwendungsfällen dieses Lichtschnittverfahrens ist es notwendig, mehrere Lichtquellen zu verwenden, welche den zu vermessenden Gegenstand von verschiedenen Richtungen ausleuchten, um so auch kompliziertere Querschnittsformen vermessen zu können. Das von den einzelnen Lichtquellen abgegebene Licht, insbesondere ein Laserlichtstrahl, wird mit einer Zylinderoptik aufgeweitet, sodaß am zu vermessenden Gegenstand nur eine möglichst dünne Linie maximaler Intensität abgebildet wird. Die einzelnen Linien sollen jedoch in einer Ebene liegen, weshalb eine genaue und aufwendige Kamerajustierung erforderlich wird. Diese Linien (Lichtschnitte) werden sodann mit den Kameras aufgenommen; wenn in einem Bereich des Gegenstandes mehrere Streifen abgebildet werden, können Meßfehler eintreten, da die Kameras Doppellinien aufnehmen oder Verschiebungen des Helligkeitsmaximums entstehen und damit die Auswertung des Bildes nicht eindeutig durchgeführt werden kann bzw. fehlerhaft ist.

Die EP-A-0305107, insbesondere Fig.2(a), offenbart ein Lichtschnittverfahren mit mehreren Lichtquellen und zugeordneten Kameras, bei dem jeder Kamera nur das Licht des zugeordneten Lichtstreifens bzw. der zugeordneten Lichtquelle zugeführt ist und bei dem die Signale der einzelnen Kameras zunächst getrennt ausgewertet werden. Auch diese Einrichtung ist anfällig gegenüber Fehllicht bzw. Fehlbeleuchtungen.

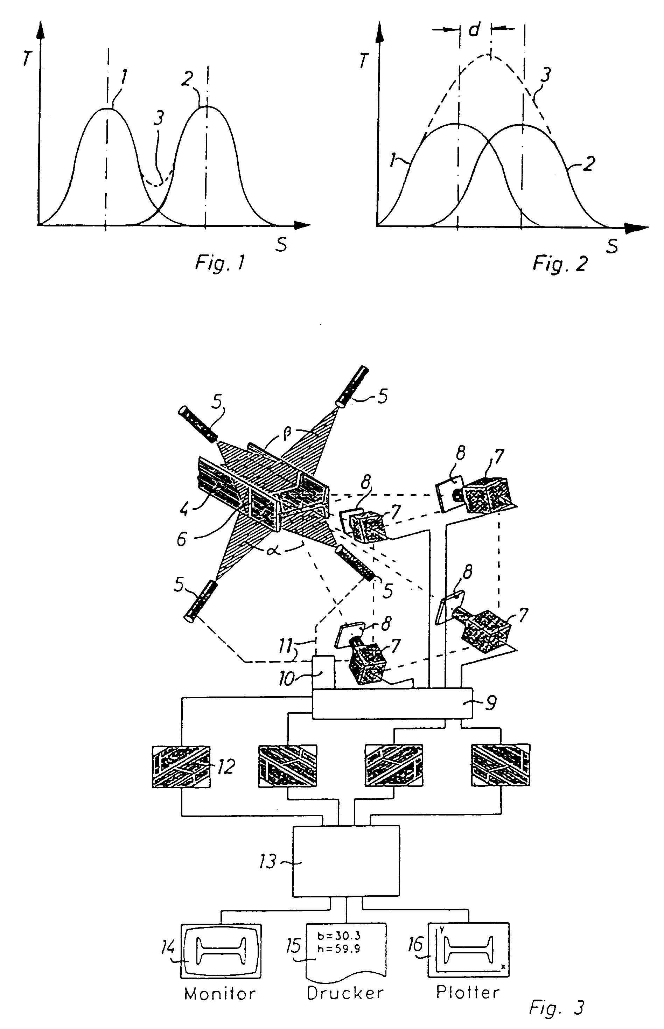

Fig.1 und 2 der beiliegenden Zeichnungen zeigen die Helligkeitsverläufe am Meßobjekt bzw. dem zu vermessenden Gegenstand in einem Schnitt normal zum Lichtschnitt bei dejustierten Lichtquellen. Die Diagramme in Fig.1 und 2 besitzen als Abszisse die räumliumliche Erstreckung S des Gegenstandes und als Ordinate die Intensität T des am Gegenstand abgebildeten Streifens. Aus der Fig.1 ist zu erkennen, daß der Helligkeitsquerschnitt 1 des Lichtschnittes aus einer ersten Laserlichtquelle und der Helligkeitsquerschnitt 2 des Lichtschnittes aus einer zweiten Laserlichtquelle räumlich gegeneinander verschoben sind, sodaß sich eine Summenhelligkeitsverteilung zwischen diesen beiden Helligkeitsquerschnitten entsprechend Kurve 3 ergibt, und ein eindeutiges Minimum zwischen zwei Maxima entsteht. Derartige Helligkeitsverteilungen sind von einer Kamera nicht unterscheidbar; die Bildauswerteeinrichtung erkennt nicht, welches der richtige zu verarbeitende Streifen ist.

In Fig.2 sind die beiden Helligkeitsquerschnitte der beiden Lichtquellen näher aneinandergerückt, sodaß sich eine Summenhelligkeitsverteilung gemäß der Kurve 3 ergibt und nur mehr ein einziges Helligkeitsmaximum vorliegt, welches von der Bildauswerteeinrichtung zwar ausgewertet wird, jedoch gegenüber dem tatsächlichen zu verwertenden Helligkeitsmaximum einer der beiden Helligkeitsquerschnitte um den Abstand d räumlich verschoben ist.

Derartige Fehler sind insbesondere bei der Kalibrierung des Meßsystems störend, da die Kalibrierungen Grundlage für das nachfolgende Vermessen von Gegenständen und das Auswerten der Meßergebnisse sind. Eine exakte Justierung der Lichtquellen ist jedoch zeitaufwendig und erfordert präzise mechanische Vorrichtungen. Ferner können störende thermische mechanische oder optische Einflüsse die justierten Lichtquellen wieder dejustieren, sodaß eine neue Justierung erforderlich wäre, um eine gültige Kalibrierung für die nachfolgende Messung zur Verfügung zu haben. Schließlich sollen auch bei der Messung Fehler aufgrund unrichtiger Auswertung von Helligkeitsmaxima vermieden werden.

Ziel der Erfindung ist es, ein Vermessungs- bzw. Kalibrierungsverfahren bzw. eine Anordnung zur Durchführung dieses Verfahrens zu erstellen, mit dem bzw. der es möglich wird, das von verschiedenen Lichtquellen auf den Gegenstand bzw. Kalibrierungsgegenstand abgestrahlte Licht in den Empfangseinrichtungen, d.h. in einer oder mehreren Videokameras eindeutig voneinander trennen zu können. Nur auf diese Weise können Doppellinien eindeutig ausgewertet und Verschiebungen des Helligkeitsmaximums vermieden werden und eine Nachjustierung bzw. neuerliche Justierung der optischen Einrichtungen vermieden werden.

Diese Ziele werden bei einem Verfahren der eingangs genannten Art erfindungsgemäß mit den Merkmalen im Kennzeichen des Patentanspruches 1 erreicht. Diese den einzelnen Kameras eindeutig von vornherein zugeordneten Lichtsignale können nunmehr derart ausgewertet werden, daß nach der getrennten Auswertung der Signale der Kameras die Zusammenführung der Bilddaten und die Berechnung der Abmessungen des Gegenstandes erfolgt.

Bei einer bevorzugten Ausführungsform des erfindungsgemäßen Verfahrens ist vorgesehen, daß zur eindeutigen Zuordnung und Aufzeichnung der von jeder einzelnen Lichtquelle erzeugten Lichtstreifen die von verschiedenen Lichtquellen erzeugten Lichtstreifen mit Licht unterschiedlicher Wellenlänge und/oder unterschiedlicher Polarisation erzeugt werden und die dem(n) jeweiligen Lichtstreifen zugeordnete Kamera nur auf die jeweilige Wellenlänge bzw. Polarisation des von der zugeordneten Lichtquelle ausgestrahlten Lichtes empfindlich abgestimmt wird. Erfindungsgemäß können somit Lichtquellen eingesetzt werden, die jeweils unterschiedliches Licht aussenden, das jeweils nur von der der speziellen Lichtquelle zugeordneten Kamera empfangen werden kann. So können z.B. Laserlichtquellen eingesetzt werden, die unterschiedliche Wellenlängen abstrahlen, wobei die Kameras durch verschieden durchlässige Filter auf die bestimmte Wellenlänge der ihnen jeweils zugeordneten Lichtquelle empfindlich gemacht werden. Gleichzeitig oder alternativ ist es möglich, daß die Lichtstreifen von verschiedenen Lichtquellen in zeitlich sich nicht überschneidender Aufeinanderfolge am Gegenstand ab- bzw. ausgebildet werden und die einzelnen Kameras in Übereinstimmung mit ihrer Zuordnung zu den einzelnen gerade abgebildeten Streifen und der Zeitspanne der Abbildung der Streifen zur Aufnahme frei gegeben werden.

Auf diese Weise ist es möglich, das von einer einzelnen Lichtquelle abgegebene, als Lichtstreifen auf dem Gegenstand abgebildete Licht eindeutig der entsprechend justierten, der jeweiligen Lichtquelle zugeordneten Kamera zuzuführen. Von den jeweils anderen Lichtquellen abgestrahltes Licht wird von dieser Kamera nicht empfangen, sodaß insbesondere bei Kalibrierungsmessungen eine geringfügige Dejustierung der Kameras und gegeneinander verschobene Helligkeitsmaxima keine Rolle mehr spielen, weil es nicht zum Empfang von Doppellinien bzw. Verschiebungen des Helligkeitsmaximums kommt und damit die im Zuge der Kalibrierungsmessung gemessenen Parameter der genannten optischen Einrichtung einzeln und sehr genau für jedes Paar Lichtquelle-Kamera bestimmt werden können und die nachfolgenden Vermessungen von weiteren Gegenständen ebenfalls sehr exakt vorgenommen werden können.

Eine erfindungsgemäße Anordnung zur optoelektronischen Vermessung der eingangs genannten Art ist durch die Merkmale im Anspruch 8 gekennzeichnet.

Erfindungsgemäß ist ferner vorgesehen, daß die einzelnen Lichtquellen zur Ausbildung ihrer jeweiligen Streifen zur Aussendung von Lichtstrahlen mit im Vergleich miteinander unterschiedlicher Wellenlänge und/oder Polarisation eingerichtet sind und/oder daß die Zeiten der Lichteinstrahlung auf den Gegenstand und die Empfangsfreigabe der dem(n) jeweiligen Lichtstreifen zugeordneten Kamera zeitlich aufeinander abgestimmt sind und die Abbildungs- und Aufnahmezeiten der einzelnen zugeordneten Paare Lichtquelle-Kamera einander nicht überlappen. Dazu können entsprechende Steuerschaltungen vorgesehen werden.

Erfindungsgemäße Vermessungsanordnungen sind insbesondere für die Kontrolle des Walzquerschnittes von gewalzten Gegenständen direkt hinter dem Walzgerüst zur Kontrolle der Querschnittsform von Stranggußknüppeln, für die Vermessung von Guß- oder Schmiedeteilen, z.B. Turbinenschaufeln od.dgl. geeignet. Auch bei medizinisch-technischen sowie fertigungstechnischen Vermessungen kann die erfindungsgemäße Anordnung vorteilhaft eingesetzt werden.

Im wesentlichen ist ein Verfahren zur optoelektronischen Vermessung der Form von Gegenständen bzw. zum Kalibrieren von optoelektronischen Vermessungseinrichtungen, wobei auf den zu vermessenden Gegenstand bzw. den Kalibrierungsgegenstand zumindest von zwei Lichtquellen, vorzugsweise Laserlichtquellen, jeweils zumindest ein Lichtstreifen projiziert wird (Lichtschnittverfahren), wobei die Lichtstreifen von einer der Anzahl der Lichtquellen oder Lichtstreifen entsprechenden Anzahl von diesen jeweils zugeordneten Videokameras aufgenommen werden, und wobei die Kamerasignale einer Auswerteeinheit zugeführt werden, dadurch gekennzeichnet, daß von jeweils den einzelnen Lichtquellen Licht mit unterschiedlichen Eigenschaften z.B. Wellenlänge, Polarisation,ausgesandt wird, daß jeder Lichtquelle bzw. jedem erzeugten Lichtstreifen eine bestimmte Videokamera zugeordnet wird, welche nur für dieses von der Lichtquelle ausgesandte Licht empfindlich ist, sodaß nur das Licht von diesem(n) bestimmten Lichtstreifen der zugeordneten Videokamera zugeführt wird, daß aus dem empfangenen Licht in jeder Videokamera Signale gebildet und der Auswerteeinheit zugeführt werden, wobei die Signale der einzelnen Videokameras von den Signalen der jeweils anderen Kamera(s) getrennt ausgewertet werden, worauf die Zusammenführung der Bilddaten und Bildpunkte und die Berechnung der Abmessungen des Gegenstandes erfolgen. Ferner ist in vorteilhafter Weise eine erfindungsgemäße Anordnung zur optoelektronischen Vermessung der Form, insbesondere Querschnittsform, von Gegenständen, z.B. Werkstücken, bzw. zum Kalibrieren von optoelektronischen Vermessungseinrichtungen, wobei auf den zu vermessenden Gegenstand bzw. auf den Kalibriergegenstand von zumindest zwei Lichtquellen, vorzugsweise Laserlichtquellen, jeweils zumindest ein Lichtstreifen projiziert wird (Lichtschnittverfahren), welche Lichtstreifen von einer der Anzahl der Lichtquellen oder Lichtstreifen entsprechenden Anzahl von Videokameras, vorzugsweise CCD-Halbleiterkameras, aufgenommen werden, wobei jeder Lichtquelle eine Videokamera zugeordnet ist und wobei die Videokameras an eine einen Rechner umfassende Auswerteeinrichtung angeschlossen sind, dadurch gekennzeichnet, daß jede Lichtquelle zur Aussendung von Licht mit in Bezug auf das Licht der anderen Lichtquelle(n) unterschiedlichen Eigenschaften ausgebildet ist und daß die Videokameras nur zum Empfang des Lichtes der ihnen jeweils zugeordneten Lichtquelle ausgebildet sind.

Insbesondere wenn zur Beleuchtung der Gegenstände Laserlicht verwendet wird, ist es erfindungsgemäß zweckmäßig, wenn die Gegenstände zur Ausschaltung von Interferenzen bzw. Abbildungsfehlern zumindest während ihrer Beleuchtungs- und Abtastungszeit in Schwingung versetzt werden, mit einer Amplitude, die größer als die halbe Wellenlänge des den Gegenstand beleuchteten Lichtes gewählt wird und mit einer Periodendauer, die der Meßzeit bzw. dem Meßzeitintegrationsintervall bzw. der elektronischen Verschlußzeit der Kamera, vorzugsweise etwa einer Zeitspanne von 10 bis 30 msec, insbesondere annähernd 20 msec, entspricht bzw. diese unterscheidet. Es wird der Gegenstand aktiv in Schwingung versetzt, welche sich bezüglich Amplitude und Periode beträchtlich von den bei Herstellungs bzw. Bearbeitungsverfahren, z.B. in Walzwerken, auftretenden Schwingungsparametern unterscheiden. Besonders vorteilhaft ist eine Vermessung schwingender Gegenstände, wenn es sich um zu untersuchende Werkstücke, z.B. Turbinenschaufeln usw., handelt.

Vorteilhafterweise soll die Schwingungskomponente der Schwingung in Richtung Lichtquelle und/oder Videokamera bzw. des eingestrahlten und/oder rückgestrahlten Laserlichtes die angegebenen Werte besitzen. Eine sinnvolle Obergrenze in Hinblick auf den Aufwand zur Schwingungserzeugung und die Meßgenauigkeit liegt bei 100 Wellenlängen, vorzugsweise bei 10 Wellenlängen. Die Oberflächenrauhigkeit ist dabei von geringerer Bedeutung. Eine Verbesserung der Meßgenauigkeit an sich erhält man aber bei glänzenden Gegenständen, wenn die Oberfläche der zu untersuchenden Gegenstände vor der Vermessung mattiert wird.

Im folgenden wird die Erfindung anhand der Zeichnung näher erläutert, in der Fig.3 eine schematische Darstellung einer erfindungsgemäßen Anordnung zeigt, Fig.4a und b schematisch die Vermessung eines komplexen Gegenstandes verdeutlicht und Fig.5 die Vermessung eines Gegenstandes auf einer Schwingungseinrichtung darstellt.

Fig.3 verdeutlicht das Prinzip des Meßverfahrens. Der zu untersuchende Gegenstand 4 wird mit einer Anzahl von Lichtquellen 5, im vorliegenden Fall mit vier Laserlichtquellen, beleuchtet, wobei die Laserlichtquellen 5 Licht unterschiedlicher Wellenlängen und/oder Polarisation abstrahlen. Der Lichtstrahl der Laser 5 wird mittels einer nicht dargestellten Optik in eine Ebene aufgeweitet, sodaß am Meßobjekt eine helle Kontur bzw. ein heller Lichtstreifen 6 abgebildet wird. Jeder Laser 5 bildet einen hellen Streifen 6 ab, die sich am Gegenstand üblicherweise teilweise überlappen. Die Lichtebene, die von jedem Laser 5 aufgespannt wird, steht zweckmäßigerweise senkrecht zur Längsachse des Körpers (Winkel beta); die Lichtebenen der einzelnen Laser 5 werden derart ausgerichtet, daß sie wiederum soweit als möglich in einer gemeinsamen Ebene justiert sind, um die von den einzelnen Lasern erzeugten Lichtstreifen so weit wie möglich zu überlagern bzw. in eine definierte Schnittebene mit dem Gegenstand zu legen, um Auswertefehler beruhend auf Lageungenauigkeiten von vornherein zu vermeiden, welchen Bemühungen jedoch thermische oder mechanische Dejustierungen entgegenstehen. Die Lichtebenen können schräg zur Längsachse angeordnet werden, was beispielsweise bei Ebenheitsmessungen von Blechen vorteilhaft ist.

Die von den Lasern auf dem Gegenstand 4 abgebildeten Lichtschnitte 6 werden von Halbleiterkameras 7 aufgenommen, die in einem Winkel alpha in Bezug auf die optische Achse bzw. Lichtebene des der jeweiligen Kamera 7 zugeordneten Lasers 5 geneigt ist. Jeder Kamera 7 ist ein Filter vorgeschaltet, das nur Licht der Wellenlänge durchläßt, das von dem zugehörigen Laser 5 abgestrahlt wird, sodaß jede Kamera 7 nur Licht von der ihr zugeordneten Laserlichtquelle 5 empfangen kann. Damit wird eine Beeinflussung jeder Kamera 7 durch von andern, nicht zugeordneten, Lichtquellen 5 ausgestrahltem Licht völlig vermieden. Damit können sehr genau die Lichtschnitte bzw. die Kontur der Streifen 6 am Gegenstand bzw. am Kalibriergegenstand ausgewertet werden.

Die Erfindung bietet somit den Vorteil, daß sowohl Kalibrierungsmessungen genau und rasch durchgeführt werden können als auch die Genauigkeit der Vermessungen erhöht wird, da untereinander unbeeinflußte Lichtschnitte beobachtet und ausgewertet werden können.

Ferner ist es auch möglich, eine einzelne Laserlichtquelle 5 und die ihr jeweils zugeordnete Kamera 7 vorzugsweise gleichzeitig zu gemeinsamen Beleuchtungs- bzw. Beobachtungszeitspannen einzuschalten. Es werden somit jeweils ein Paar Lichtquelle-Kamera eingeschaltet, während die anderen drei Paare ausgeschaltet sind. So entfällt auch beim Einsatz von Licht gleicher Wellenlänge jeder ungewollte Einfluß. Die Einschaltzeiten der jeweiligen Paare überlappen einander nicht; die einzelnen Paare werden der Reihe nach eingeschaltet, z.B. können zugeordnete Paare Kamera-Lichtquelle in einer Sekunde bis zu fünfzigmal für Beobachtungszeitspannen von etwa 5 ms eingeschaltet werden, wobei noch eine ausreichende Auswertequalität erhalten wird. Entsprechende Steuerleitungen für die Lichtquellen 5 bzw. die Kameras 7 sind mit 11 angedeutet; die Steuereinheit 10, von der aus die Hell-Dunkel-Steuerung erfolgt, kann mit der Auswerteeinheit 9 für die Kamerasignale gekoppelt sein bzw. wirkt mit dieser zusammen.

Die Auswerteeinrichtung 9 umfaßt einen Rechner, von dem die Videosignale der Kameras 7 digitalisiert werden und der diese speichert. Der Rechner sucht aus der Bildmatrix diejenigen Punkte heraus, welchen den Lichtschnitt darstellen. Im Falle einer Vermessung sind die Positionsdaten des Gegenstandes und die Position und Ausrichtung der Kamera relativ zur Lichtebene sowie die Objektivbrennweite bekannt, sodaß die gefundenen Bildpunkte geometrisch entzerrt und in die tatsächlichen Objektkoordinaten zurückgerechnet werden können.

Bemerkt wird, daß in günstigen Fällen bereits zwei Kameras genügen, für Rundquerschnitte mindestens drei Kameras erforderlich sind und mit vier Kameras, wie in Fig.3 dargestellt, sich nahezu alle gängigen Profile mit konvexen und konkaven Querschnittsformen komplett zu vermessen sind, soferne keine Hinterschnitte vorliegen.

Als Lichtquellen 5 kommen somit Weißlichtquellen mit entsprechenden Farbfiltern, bezüglich ihrer Wellenlänge durchstimmbare Laser, Laserdioden, od.dgl. in Frage. Entsprechende Optiken sind zur Ausbildung der sehr schmalen Lichtschnitte am Gegenstand bekannt.

Als Kameras kommen Videokameras, Halbleiterkameras, insbesondere CCD-Kameras bzw. Kameras mit auf bestimmte Farben ansprechenden Sensoren, sogenannte Farbkameras, in Frage. Vorzugsweise werden zur Bildaufnahme CCD-Kameras verwendet, die einen aus einer Matrix von etwa 500 x 500 Fotodioden aufgebauten Halbleitersensor umfassen, der im wesentlichen verzerrungsfreie Bilder liefert.

Zur Auswertung der in der Auswerteeinheit 9 gespeicherten Videosignale der Kameras wird zunächst das Bild nach Konturanfangspunkten abgesucht, indem die Helligkeitskontraste der Bildpunkte überprüft werden. Nach dem Ermitteln entsprechender Polygonzüge, jeweils für die einzelnen Signale der Videokameras getrennt, wird jeder ermittelte Polygonzug in die Objektkoordinaten transformiert, sodann werden die von den einzelnen Kameras erhaltenen Polygonzüge zur Gesamtstruktur zusammengefügt und daraus die gewünschten Abmessungen berechnet.

Die Abbildungs- bzw. Entzerrungsparameter werden durch Kalibrieren bestimmt, wozu ein Kalibrierkörper ins Meßfeld der Kameras gebracht wird, dessen genaue Maße im Rechner gespeichert sind. Wenn nach der vorhin beschriebenen Methode der Lichtschnitt des Kalibrierkörpers aufgenommen wird, können aus dem Vergleich der gespeicherten Abmessungen mit den gemessenen Lichtschnitten die Entzerrungsparameter berechnet werden. Insbesondere für dieses Kalibrierungsverfahren ist es wichtig, wenn von den Kameras eindeutige Signale der ihnen zugeordneten Lichtschnitte aufgenommen werden können, unbeeinflußt von den von den anderen Lichtquellen ausgebildeten Lichtschnitten.

Mit 12 ist in Fig.3 die Einheit zur Verarbeitung der Signale der einzelnen Kameras zu Polygonzügen angedeutet. Mit 13 ist die Einheit zum Zusammenfügen der einzelnen Polygonzüge zum Umriß bzw. Querschnitt des Gegenstandes angedeutet. Mit 14 ist ein Monitor zur Darstellung des vermessenen Gegenstandes angedeutet, mit 15 ein Drucker zum Ausdrucken der Abmessungen des Gegenstandes oder anderer vermessener bzw. gewonnener Daten und mit 16 ist ein Plotter zur grafischen Aufzeichnung der ausgewerteten Kontur des untersuchten Gegenstandes angedeutet.

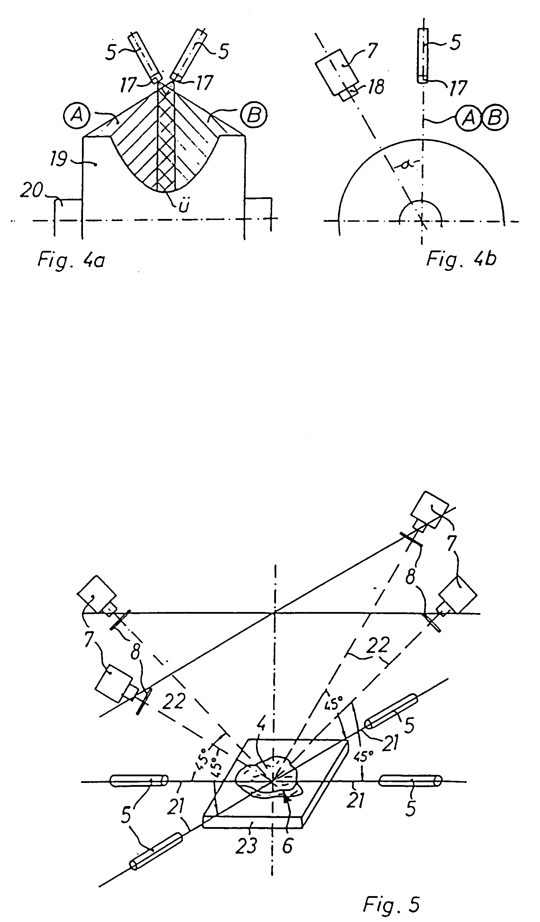

Fig.4a und Fig.4b zeigen in zwei zueinander senkrecht stehenden Schnitten die Vermessung eines Rollenkörpers 19 mit zylindrischen Lagerbolzen 20. Dazu wird Licht von zwei Lasern 5 in zwei Ebenen (A,B) auf die Rolle 19 abgestrahlt, wobei den Lasern 5 Polarisationsfilter 17 vorgeschaltet sind, die entgegengesetzte Polarisationsrichtung aufweisendes Licht erzeugen; die Ebenen A,B schneiden in einer Ebene die zu vermessende Rolle 19. Aus dem zu Fig.4a senkrechten Schnitt in Fig.4b ist zu erkennen, daß die in Fig.4a nicht dargestellten Kameras 7 in einem Winkel alpha zur jeweiligen Beleuchtungsebene A,B stehen und jeweils mit einem Polarisationsfilter 18 versehen sind, das jeweils auf die Polarisationsrichtung des Lichtes des zugeordneten Lasers 5 abgestimmt ist. Der Überlappungsbereich der beiden Lichtquellen 5, der zu Fehlern führen würde, ist in Fig.4a mit ü bezeichnet.

In der Fig.4b ist nur eine Kamera 7 dargestellt; es versteht sich jedoch, daß zwei Kameras vorhanden sind, die beide Polarisationsfilter 18 aufweisen, deren Polarisationsrichtungen zueinander senkrecht ausgerichtet sind, entsprechend der zueinander senkrechten Polarisationsrichtung der beiden Polarisationsfilter 17 der Laser 5.

Es können auch polarisiertes Licht direkt abgebende Laser verwendet werden, sodaß der Vorsatz von Polarisationsfiltern bei den Lasern wegfällt. Es ist auch möglich, eine zirkulare Polarisation des Lichtes vorzunehmen und entsprechende Zirkularpolarisationsfilter vor den Kameras anzuordnen.

Fig.5 zeigt räumlich eine Anordnung, in der der Gegenstand 4 von vier Lasern beleuchtet wird und die Lichtschnitte 6 mittels CCD-Kameras 7 mit vorgeschalteten Filtern 8 beobachtet werden. Man erkennt, daß die optischen Achsen 21 der Laser 5 und die optischen Achsen 22 der Kameras 7 beispielsweise miteinander einen Winkel von 45° einschließen und die vom Laserlicht aufgespannten Ebenen eines jeden Lasers 5 in einer gemeinsamen Gesamtebene liegen.

Gemäß Fig.5 ist der Gegenstand 4 auf einer Vibrationseinrichtung 23 angeordnet, mit der der Gegenstand 4 während der Vermessung in Schwingungen versetzt werden kann. Diese Schwingungen sind derart bemessen, daß sie vorzugsweise in der Richtung Lichtquelle-Gegenstand eine Komponente bzw. Amplitude besitzen, die größer ist als die Hälfte der kleinsten zur Vermessung eingesetzten Wellenlänge. Darüberhinaus soll die Periodendauer der Schwingung dem Meßintegrationsintervall der Kameras (des Sensorelementes) entsprechen bzw. kleiner sein als dieses, also etwa 10 bis 30 msec betragen. Es ergibt sich dadurch eine Integration des Lichtes über eine gewisse Weglänge und eine Vergleichmäßigung der von den Kameras aufgenommenen Lichtsignale, was insbesondere von Bedeutung ist, da Laserlicht bei Oberflächenungenauigkeiten bzw. technischen Oberflächen zu Interferenzen führt, die bei der Bildauswertung, insbesondere beim Kontrasterkennungsverfahren störend wirken können. Die Schwingungen der Einrichtungen 23 werden aktiv von mechanischen, elektromechanischen oder elektrischen Schwingungsgebern, z.B. Ultraschallköpfen oder elektromagnetischen Schwingungsgebern, erzeugt.

Zweckmäßig ist es ferner, wenn zur Ausschaltung von Interferenzen bzw. Abbildungsfehlern die Gegenstände, z.B. Turbinenschaufeln, (gegebenenfalls zusätzlich zu der Schwingung) einer Linearbewegung unterworfen werden, wobei in einer Meßzeit bzw. dem Meßintegrationsinterval bzw. der elektronischen Verschlußzeit der Kamera entsprechenden Zeitspanne, vorzugsweise etwa einer Zeitspanne von 10 bis 30 msec, insbesondere annähernd 20 msec, ein Weg zurückgelegt wird, der größer als die halbe Wellenlänge des Lichtes der Lichtquelle ist.

## Patentansprüche

1. Verfahren zur optoelektronischen Vermessung der Form, insbesondere Querschnittsform, von Gegenständen (4), z.B. Werkstücken, bzw. zum Kalibrieren von optoelektronischen Vermessungseinrichtungen, wobei auf den zu vermessenden Gegenstand (4) bzw. auf den Kalibriergegenstand von zumindest zwei Lichtquellen (5), vorzugsweise Laserlichtquellen, jeweils zumindest ein Lichtstreifen (6) projeziert wird (Lichtschnittverfahren), welche Lichtstreifen (6) von einer der Anzahl der Lichtquellen (5) entsprechenden Anzahl von Videokameras (7), vorzugsweise CCD-Halbleiterkameras, aufgenommen werden und die Kamerasignale einer einen Rechner umfassenden Auswerteeinheit (9) zur Bildauswertung und Berechnung der Abmessungen des Gegenstandes (4) bzw. zur Ermittlung der Basisdaten und -parameter für die Kalibration zugeführt werden, wobei jeder Lichtquelle (5) bzw. jedem von einer Lichtquelle (5) erzeugten Lichtstreifen (6) eine bestimmte Kamera (7) zugeordnet wird, dadurch gekennzeichnet, daß jeder Lichtquelle (5) bzw. jedem von einer Lichtquelle (5) erzeugten Lichtstreifen (6) eine eigene nur auf das Licht dieser Lichtquelle (5) ansprechende Aufnahmekamera (7) zugeordnet wird und daß in der Auswerteeinheit (9) bzw. im Rechner die Signale der einzelnen Kameras (7) von den Signalen der jeweils anderen Kamera(s) (7) betreffend Form und Lage des(r) Lichtstreifen(s) (6) vorerst getrennt ausgewertet werden.

2. Verfahren nach Anspruch 1, dadurch gekennzeichnet, daß nach der getrennten Auswertung der Signale der einzelnen Kameras (7) und Berechnung der Bildpunkte der einzelnen Streifen (6) die Zusammenführung der Bilddaten und Bildpunkte und die Berechnung der Abmessungen des Gegenstandes (4) erfolgt.

3. Verfahren nach Anspruch 1 oder 2, dadurch gekennzeichnet, daß zur eindeutigen Zuordnung und Aufzeichnung des von jeder einzelnen Lichtquelle (5) abgestrahlten und vom Gegenstand (4) reflektierten Streifenlichtes zu der bzw. in der bestimmten Kamera (7) von den einzelnen Lichtquellen (5) die Lichtstreifen (6) jeweils mit Licht unterschiedlicher Wellenlänge und/oder unterschiedlicher Polarisation erzeugt werden und die dem jeweiligen Lichtstreifen (6) zugeordnete Kamera nur auf die jeweilige Wellenlänge bzw. Polarisation des von der zugeordneten Lichtquelle (5) ausgestrahlten Lichtes empfindlich abgestimmt wird.

4. Verfahren nach einem der Ansprüche 1 bis 3, dadurch gekennzeichnet, daß die Lichtquellen (5) und Kameras (7) gleichzeitig zur Beleuchtung des Gegenstandes (4) und Aufnahme des Streifenlichtes eingeschaltet werden.

5. Verfahren nach einem der Ansprüche 1 bis 4, dadurch gekennzeichnet, daß die Streifen (6) verschiedener Lichtquellen (5) von diesen Lichtquellen (5) in zeitlich sich nicht überschneidender Aufeinanderfolge am Gegenstand (4) abgebildet werden und die einzelnen Kameras (7) in Übereinstimmung mit ihrer Zuordnung zu den gerade abgebildeten Streifen (6) während der Abbildung der Streifen (6) zur Aufnahme frei gegeben werden.

6. Verfahren insbesondere nach einem der Ansprüche 1 bis 5, dadurch gekennzeichnet, daß die Gegenstände (4) zur Ausschaltung von Interferenzen bzw. Abbildungsfehlern zumindest während ihrer Beleuchtungs- und Abtastungszeit in Schwingung versetzt werden, mit einer Amplitude, die größer als die halbe Wellenlänge des den Gegenstand (4) beleuchtenden Lichtes gewählt wird und mit einer Amplitudendauer, die der Meßzeit bzw. dem Meßzeitintegrationsintervall bzw. der elektronischen Verschlußzeit der Kamera (7), vorzugsweise etwa einer Zeitspanne von 10 bis 30 msec, insbesondere annähernd 20 msec, entspricht bzw. diese unterschreitet.

7. Verfahren nach einem der Ansprüche 1 bis 6, dadurch gekennzeichnet, daß zur Ausschaltung von Interferenzen bzw. Abbildungsfehlern die Gegenstände (4) einer Linearbewegung unterworfen werden, wobei in einer Zeitspanne entsprechend der Meßzeit bzw. dem Meßzeitintegrationsintervall bzw. der elektronischen Verschlußzeit der Kamera (7), vorzugsweise etwa einer Zeitspanne von 10 bis 30 msec, insbesondere annähernd 20msec, ein Weg größer als die halbe Wellenlänge des Lichtes der Lichtquelle (5) zurückgelegt wird.

8. Anordnung zur optoelektronischen Vermessung der Form, insbesondere Querschnittsform von Gegenständen (4), z.B. Werkstücken, bzw. zum Kalibrieren von optoelektronischen Vermessungseinrichtungen, wobei auf den zu vermessenden Gegenstand (4) bzw. auf den Kalibrierungsgegenstand von zumindest zwei Lichtquellen (5), vorzugsweise Laserlichtquellen, jeweils zumindest ein Lichtstreifen (6) projeziert wird (Lichtschnittverfahren), welche Lichtstreifen (6) von einer der Anzahl der Lichtquellen (5) entsprechenden Anzahl von Videokameras (7), vorzugsweise CCD-Halbleiterkameras, aufgenommen werden, welche Kameras (7) an eine einen Rechner umfassende Auswerteeinrichtung (9) zur Bildauswertung bzw. zur Berechnung der Abmessungen des Gegenstandes (4) bzw. zur Ermittlung der Basisdaten und Basisparameter für die Kalibrierung angeschlossen sind, zur Durchführung des Verfahrens nach einem der Ansprüche 1 bis 8, dadurch gekennzeichnet, daß jeder Lichtquelle (5) bzw. jedem von einer Lichtquelle erzeugten Lichtstreifen (6) eine eigene, nur auf das Licht dieser Lichtquelle (5) ansprechende Aufnahmekamera (7) zugeordnet ist.

9. Anordnung nach Anspruch 8, dadurch gekennzeichcnet, daß die einzelnen Lichtquellen (5) zur Ausbildung ihrer jeweiligen Lichtstreifen (6) zur Aussendung von Lichtstrahlen mit im Vergleich miteinander unterschiedlicher Wellenlänge und/oder Polarisation eingerichtet sind oder die Zeiten der Lichteinstrahlung auf den Gegenstand (4) und die Empfangsfreigabe der dem(n) jeweiligen Streifen (6) zugeordneten Kamera (7) zeitlich aufeinander abgestimmt sind und die Abbildungs- und Aufnahmezeiten der einzelnen zugeordneten Paare Lichtquelle-Kamera (5,7) einander nicht überlappen.

10. Anordnung nach Anspruch 8 oder 9, dadurch gekennzeichnet, daß als Lichtquellen (5) mit im Vergleich miteinander für unterschiedliche Wellenlängen durchlässigen Farbfiltern (8) versehene Lichtquellen und/oder auf unterschiedlichen Frequenzen betriebene Laserlichtquellen, z.B. Laserdioden, frequenzdurchstimmbare Laser od.dgl., vorgesehen sind und daß jeder Kamera (7) ein nur für die Wellenlänge der zugeordneten Lichtquelle (5) durchlässiges Filter (8) vorgeschaltet ist oder jede Kamera (7) ein(en) auf die Wellenlänge der zugeordneten Lichtquelle (5) spezifisch empfindlichen(s) Sensorelement aufweist (Farbkamera).

11. Anordnung nach einem der Ansprüche 8 bis 10, dadurch gekennzeichnet, daß als Lichtquellen (5) polarisiertes Licht abstrahlende Laser oder mit Polarisationsfiltern versehene Lichtquellen vorgesehen sind, wobei die Lichtquellen (5) zur Aussendung von Lichtstrahlen mit im Vergleich zueinander unterschiedlicher Polarisation, insbesondere unterschiedlicher zirkularer Polarisation, eingerichtet sind und daß jeder Kamera (7) ein Polarisationsfilter vorgeschaltet ist, das nur für das polarisierte Licht der zugeordneten Lichtquelle (5) durchlässig ist.

12. Anordnung nach einem der Ansprüche 8 bis 11, dadurch gekennzeichnet, daß jede Lichtquelle (5), z.B. Laserlichtquelle, von einer Schalteinrichtung (10) zur zeitbegrenzten Beleuchtung des Gegenstandes (4) ein- und ausschaltbar ist und daß die Aufnahmezeit bzw. -dauer der dieser Lichtquelle (5) zugeordneten Kamera (7) von der Schalteinrichtung (10) zeitsynchron mit der Beleuchtungszeit der Lichtquelle (5) gesteuert ist.

13. Anordnung insbesondere nach einem der Ansprüche 8 bis 12, dadurch gekennzeichnet, daß der zu vermessende Gegenstand (4) für die Zeitdauer der Untersuchung mit einer Vibrationseinrichtung bzw. einem Schwingungserzeuger (23) verbunden ist, z.B. einem angekoppelten Ultraschallkopf, einem Elektromagneten, einem mechanischen Schwingungsgeber od.dgl., mit dem dem Gegenstand (4) eine Geschwindigkeit erteilbar ist, bei der Gegenstand (4) zumindest die Wegstrecke einer halben Wellenlänge des den Gegenstand (4) beleuchtenden Lichtes innerhalb einer Zeitspanne zurücklegt, die der Meßzeit bzw. dem Meßzeitintegrationsintervall bzw. der elektronischen Verschlußzeit der Kamera (7), vorzugsweise etwa einer Zeitspanne von 10 bis 30 msec, insbesondere annähernd 20 msec, entspricht.

## Claims

1. A method for the optoelectronic measurement of the shape, more particularly the cross-sectional shape, of objects (4), e.g. workpieces, or for the calibration of optoelectronic measuring equipment, in which there is projected onto the object (4) to be measured or onto the calibration object at least one light strip (6) respectively from each of at least two light sources (5), preferably laser light sources (light section method), which light strips (6) are received by a number of video cameras (7), preferably CCD semiconductor cameras, corresponding to the number of light sources (5), and the camera signals are supplied to an evaluating unit (9) comprising a computer to evaluate the image and calculate the dimensions of the object (4) or to determine the basic data and basic parameters for the calibration, a specific camera (7) being associated with each light source (5) or with each light strip (6) produced by a light source (5), characterized in that with each light source (5) or with each light strip (6) produced by a light source (5) is associated a separate photographic camera responding only to the light of this light source (5), and in that in the evaluating unit (9) or in the computer the signals of the individual cameras (7) are evaluated initially separately from the signals of the respective other camera(s) with respect to shape and position of the light strip(s) (6).

2. A method according to claim 1, characterized in that after the separate evaluation of the signals of the individual cameras (7) and calculation of the pixels of the individual strips (6), the image data and pixels are brought together and the dimensions of the object (4) are calculated.

3. A method according to claim 1 or 2, characterized in that in order to achieve the precise allocation and recording of the strip light emitted by each individual light source (5) and reflected by the object (4) to and in the specific camera (7), the light strips (6) are produced by the individual light sources (5) each with light of a different wavelength and/or different polarization and the camera associated with each light strip (6) is adjusted so as to be sensitive only to the particular wavelength or polarization of the light emitted by the associated light source (5).

4. A method according to one of claims 1 to 3, characterized in that the light sources (5) and cameras (7) are switched on at the same time in order to illuminate the object (4) and to receive the strip light.

5. A method according to one of claims 1 to 4, characterized in that the strips (6) of different light sources (5) are imaged on the object (4) by these light sources (5) in chronologically non-overlapping succession and the individual cameras (7) are cleared for receiving in accordance with their allocation to the strips (6) just being imaged for the period of the imaging of the strips (6).

6. A method more particularly according to one of claims 1 to 5, characterized in that in order to eliminate interferences or image defects, the objects (4) are set vibrating at least for the period of their illumination and scanning time, with an amplitude which is greater than half the wavelength of the light illuminating the object (4) and with an amplitude duration corresponding to or lying below the measuring time or the measuring time integration period or the electronic shutter speed of the camera (7), preferably a time interval of about 10 to 30 msec, more particularly approximately 20 msec.

7. A method according to one of claims 1 to 6, characterized in that in order to eliminate interferences or image defects, the objects (4) are subjected to a linear movement in which over a time interval corresponding to the measuring time or the measuring time integration period or the electronic shutter speed of the camera (7), preferably a time interval of about 10 to 30 msec, more particularly approximately 20 msec, a distance is covered which is greater than half the wavelength of the light of the light source (5).

8. An arrangement for the optoelectronic measurement of the shape, more particularly the cross-sectional shape, of objects (4), e.g. workpieces, or for the calibration of optoelectronic measuring equipment, in which there is projected onto the object (4) to be measured or onto the calibration object at least one light strip (6) respectively from each of at least two light sources (5), preferably laser light sources (light section method), which light strips (6) are received by a number of video cameras (7), preferably CCD semiconductor cameras, corresponding to the number of light sources (5), which cameras (7) are connected to an evaluating unit (9) comprising a computer to evaluate the image or to calculate the dimensions of the object (4) or to determine the basic data and basic parameters for the calibration, for the implementation of the method according to one of claims 1 to 8, characterized in that with each light source (5) or each light strip (6) produced by a light source is associated a separate photographic camera (7) responding only to the light of this light source (5).

9. An arrangement according to claim 8, characterized in that the individual light sources (5) for the formation of their respective light strips (6) are set to emit light rays with different wavelengths and/or polarizations compared with one another or the times of the radiation of light on the object (4) and the clearing to receive of the camera associated with the respective strip(s) (6) are chronologically synchronized with one another and the imaging and exposure times of the individual associated light source-camera pairs (5, 7) do not overlap one another.

10. An arrangement according to claim 8 or 9, characterized in that light sources provided with colour filters (8) permeable to different wavelengths compared with one another and/or laser light sources operated at different frequencies, e.g. laser diodes, variable-frequency lasers or the like, are provided as light sources (5), and in that placed in front of each camera (7) is a filter (8) which is permeable only to the wavelength of the associated light source (5), or each camera (7) has a sensor or sensor element specifically sensitive to the wavelength of the associated light source (5) (colour camera).

11. An arrangement according to one of claims 8 to 10, characterized in that lasers radiating polarized light or light sources provided with polarization filters are provided as light sources (5), the light sources (5) for emitting light rays being set with different polarizations compared with one another, more particularly different circular polarizations, and in that placed in front of each camera (7) is a polarization filter which is permeable only to the polarized light of the associated light source (5).

12. An arrangement according to one of claims 8 to 11, characterized in that each light source (5), e.g. laser light source, may be switched on and off by a switching device (10) for time-limited illumination of the object (4), and in that the exposure time or duration of the camera (7) associated with this light source (5) is controlled by the switching device (10) so as to be chronologically synchronous with the illumination time of the light source (5).

13. An arrangement particularly according to one of claims 8 to 12, characterized in that for the duration of the investigation, the object (4) to be measured is connected to a vibration device or an oscillator (23), e.g. an ultrasonic head coupled thereto, an electromagnet, a mechanical vibration generator or the like, with which there may be imparted to the object (4) a speed at which the object (4) covers at least the distance of half a wavelength of the light illuminating the object (4) within a time interval which corresponds to the measuring time or the measuring time integration period or the electronic shutter speed of the camera (7), preferably a time interval of about 10 to 30 msec, more particularly approximately 20 msec.

## Revendications

1. Procédé de mesure optoélectronique de la forme, notamment celle de la section transversale, d'objets (4), par exemple des pièces à usiner, ou procédé pour calibrer des dispositifs de mesure optoélectroniques, qui implique que, sur l'objet (4) à mesurer ou sur l'objet à calibrer, on projette au moins une bande lumineuse (6) (selon la méthode de la coupe optique) provenant d'au moins deux sources lumineuses (5), de préférence, des sources de lumière laser, lesdites bandes lumineuses (6) étant captées par un nombre de caméras vidéo (7), de préférence des caméras à semi-conducteurs CCD, correspondantes au nombre des sources lumineuses (5), tandis que les signaux des caméras sont conduits vers une unité d'analyse (9) comprenant un ordinateur pour l'analyse de l'image et le calcul des dimensions de l'objet (4) ou pour le calcul des données et des paramètres de base pour le calibrage, à chaque source lumineuse (5) ou à chaque bande lumineuse générée par une source lumineuse (5) étant associée une caméra déterminée (7), caractérisé en ce que, à chaque source lumineuse (5) ou à chaque bande lumineuse (6) générée par une source lumineuse (5), est associée une caméra (7) individuelle qui ne réagit qu'à la lumière de cette source lumineuse précise (5) et que, dans l'unité d'analyse (9) ou dans l'ordinateur, les signaux de cette caméra individuelle (7) sont analysés après avoir été séparés des signaux venant des autres caméras (7) en ce qui concerne la forme et la situation de la bande lumineuse (6).

2. Procédé selon la revendication 1, caractérisé en ce que, après l'analyse séparée des signaux de la caméra individuelle (7) et après le calcul des points images (spots) des bandes individuelles (6), s'effectue la jonction des données image et des points d'image et le calcul des dimensions de l'objet (4).

3. Procédé selon la revendication 1 ou 2, caractérisé en ce que, pour l'identification irréfutable et le traçage de chaque bande lumineuse émise par chaque source lumineuse individuelle (5) et réfléchie par l'objet (4) vers ou dans la caméra (7) déterminée, les bandes lumineuses (6) venant des sources lumineuses (5) individuelles sont produites chacune avec une lumière de longueurs d'ondes différentes et/ou une polarisation différente, et la caméra associée à une bande lumineuse (6) individuelle est réglée de manière à n'être sensible qu'à la longueur d'ondes ou la polarisation de la lumière émise par la source lumineuse (5) qui lui est associée.

4. Procédé selon l'une des revendications 1 à 3, caractérisé en ce que la mise en circuit des sources lumineuses (5) pour éclairer l'objet (4) et des caméras (7) pour l'enregistrement de la bande de lumière (5) s'effectue simultanément.

5. Procédé selon l'une des revendications 1 à 4, caractérisé en ce que les bandes (6) venant de sources lumineuses (5) différentes sont reproduites par lesdites sources lumineuses (5) sur l'objet (4), séquences chronologiques nettement séparées et que chacune des caméras (7) est rendue disponible pour l'enregistrement, en conformité avec son association à la bande lumineuse venant juste d'être reproduite, pendant même la reproduction de cette bande (6).

6. Procédé, en particulier, selon l'une des revendications 1 à 5, caractérisé en ce que, pour exclure les interférences ou les défauts de reproduction, les objets (4) sont, au moins pendant leur temps d'exposition et d'exploration, mis en vibrations, sous une amplitude supérieure à la longueur de la demi-onde de la lumière éclairant l'objet (4) et sous une durée d'amplitude qui correspond ou est inférieure au temps de mesure ou à l'intervalle d'intégration du temps de mesure ou au temps d'obturation électronique de la caméra (7), cette durée étant, de préférence, comprise entre 10 et 30 ms, en particulier égale à environ 20 ms.

7. Procédé selon l'une des revendications 1 à 6, caractérisé en ce que, pour exclure les interférences ou les défauts de reproduction, les objets sont soumis à un mouvement linéaire, c'est-à-dire que pendant une durée correspondant au temps de mesure ou a l'intervalle d'intégration du temps de mesure ou au temps d'obturation électronique de la caméra (7), de préférence égal à une durée d'environ 10 à 30 ms, en particulier 20 ms environ, le trajet parcouru est supérieur à la longueur de la demionde de la lumière de la source lumineuse (5).

8. Dispositif pour la mesure optoélectronique de la forme, notamment celle de la section transversale, d'objets (4), par exemple, ou des pièces à usiner, ou pour le calibrage d'installation de mesure optoélectronique, qui prévoit que l'on projette sur l'objet (4) à mesurer ou l'objet à calibrer au moins une bande lumineuse (6) provenant respectivement d'au moins deux sources lumineuses (5), de préférence des sources de lumière laser (selon la méthode de la coupe optique), lesquelles bandes lumineuses (6) étant reçues par un nombre de caméras vidéo (7), de préférence, des caméras CCD à semi-conducteurs, correspondant au nombre des sources lumineuses (5), lesdites caméras (7) étant raccordées à un dispositif d'analyses (9) comportant un ordinateur pour l'analyse de l'image et pour le calcul des dimensions de l'objet (4) ou pour l'obtention des données de base et des paramètres de base pour le calibrage, en vue de la mise en oeuvre du procédé conforme à l'une des revendications 1 à 8, caractérisé en ce que, à chaque source lumineuse (5) c'est-à-dire à chaque bande lumineuse (6) générée par une source lumineuse, est associée une caméra de prise de vue (7) particulière uniquement sensible à la lumière de cette source lumineuse (5).

9. Dispositif selon la revendication 8, caractérisé en ce que les sources lumineuses individuelles (5) pour la réalisation de leurs bandes lumineuses respectives (6) sont agencées de manière à émettre des rayons lumineux dont les longueurs d'ondes et/ou les polarisations sont différentes, si on les compare les unes aux autres, ou bien les temps du rayonnement lumineux sur l'objet (4) et la disponibilité à la réception de la caméra (7) associée à la bande lumineuse (6) respective sont synchronisés mutuellement et les temps de reproduction et de réception des paires individuelles associées sources lumineuses-caméras (5, 7) ne se chevauchent pas.

10. Dispositif selon la revendication 8 ou 9, caractérisé en ce que, pour servir de sources lumineuses (5), sont prévues des sources lumineuses munies de filtres colorés (8) perméables à des longueurs d'ondes différentes comparées les unes aux autres et/ou des sources de lumière laser fonctionnant à des fréquences différentes, par exemple des diodes laser ou des lasers à fréquences pouvant être accordées ou analogue, et en ce que, en amont de chaque caméra (7), est monté un filtre (8) perméable uniquement à la longueur d'onde de la source lumineuse (5) associée, ou bien que chaque caméra (7) présente une cellule photo-électrique spécifiquement sensible à la longueur d'onde de ladite source lumineuse (5) associée (caméra couleur).

11. Dispositif selon l'une des revendications 8 à 10, caractérisé en ce que, pour servir de sources lumineuses (5), sont prévues des sources lumineuses munies des lasers rayonnant de la lumière polarisée ou des sources lumineuses munies de filtres de polarisation, lesdites sources lumineuses (5) étant agencées pour émettre des rayons lumineux à polarisations différentes comparées entre elles, en particulier à polarisations circulaires différentes et, en ce que, en amont de chaque caméra (7) est monté un filtre de polarisation qui n'est perméable qu'à la lumière polarisée venant de la source lumineuse (5) qui lui est associée.

12. Dispositif selon l'une des revendications 8 à 11, caractérisé en ce que chaque source lumineuse (5), par exemple une source de lumière laser, peut être mise en circuit et hors circuit par un dispositif de commande (10), afin d'obtenir une exposition limitée dans le temps de l'objet (4), et en ce que le temps de prise ou la durée d'ouverture de la caméra (7) associée à cette source lumineuse (5) est piloté par le dispositif de commande (10) en synchronisation avec le temps d'exposition de la source lumineuse (5).

13. Dispositif, en particulier, selon l'une des revendications 8 à 12, caractérisé en ce que l'objet (4) à mesurer est relié pendant la durée de l'examen à un dispositif de vibrations ou à un générateur de simulation (23), par exemple, une tête à ultra-sons couplée, un électro-aimant, un oscillateur mécanique ou un appareil analogue, à l'aide duquel il est possible de conférer à l'objet (4) une vitesse à laquelle ledit objet (4) parcourt au moins le trajet d'une demi-longueur d'onde de la lumière éclairant cet objet (4) pendant un temps donné qui correspond au temps de mesure ou à l'intervalle d'intégration du temps de mesure ou au temps d'obturation électronique de la caméra (7), ce temps étant, de préférence, compris entre 10 et 30 ms, en particulier égal à environ 20 ms.
